# EUROPEAN PATENT APPLICATION

(11) **EP 4 425 724 A1**
(43) Date of publication of application: **04.09.2024**
(21) Application number: 22906550.3
(22) Date of filing: 13.12.2022
(51) Int. Cl.: H01S 3/067

(54) **OPTICAL FIBER AMPLIFIER AND METHOD FOR AMPLIFYING OPTICAL SIGNAL**

(30) Priority: 13.12.2021 CN 202111517617
(71) Applicant: Huawei Technologies Co., Ltd., Shenzhen, Guangdong 518129 (CN)
(72) Inventor: LIU, Pei, Shenzhen, Guangdong 518129 (CN); ZHANG, Kai, Shenzhen, Guangdong 518129 (CN); WU, Bo, Shenzhen, Guangdong 518129 (CN)
(74) Representative: Thun, Clemens
(86) International application number: PCT/CN2022/138667
(87) International publication number: WO 2023/109805

(57) **Abstract**

A fiber amplifier (400, 500, 600, 701, 704, 711, 714, 803, 804, 805, 816, 817, or 818) and an optical signal amplification method are disclosed. The fiber amplifier (400, 500, 600, 701, 704, 711, 714, 803, 804, 805, 816, 817, or 818) includes: a multi-mode pump unit (410), configured to generate multi-mode pump laser light; an input unit (420), configured to input an input optical signal and the multi-mode pump laser light to a first optical path (440), where the first optical path (440) belongs to a resonant amplification unit (430), where the resonant amplification unit (430) is configured to: generate single-mode pump laser light of a first wavelength range based on the multi-mode pump laser light, and repeatedly oscillate the single-mode pump laser light of the first wavelength range in the first optical path (440), so that the input optical signal is amplified through the single-mode pump laser light of the first wavelength range; and an output unit (450), configured to output an amplified input optical signal. The fiber amplifier (400, 500, 600, 701, 704, 711, 714, 803, 804, 805, 816, 817, or 818) converts multi-mode pump laser light generated by a multi-mode pump (509, 519, 610, 630, 801, or 811) into single-mode pump laser light, so that the multi-mode pump (509, 519, 610, 630, 801, or 811) with a larger output power and lower costs can replace a single-mode pump (107) with a smaller output power and higher costs, thereby helping reduce pump costs and increasing a saturation output optical power of the fiber amplifier.

## Description

This application claims priority to Chinese Patent Application No. 202111517617.7, filed with the China National Intellectual Property Administration on December 13, 2021 and entitled "FIBER AMPLIFIER AND OPTICAL SIGNAL AMPLIFICATION METHOD", which is incorporated herein by reference in its entirety.

### TECHNICAL FIELD

This application relates to the field of optical transmission technologies, and more specifically, to a fiber amplifier and an optical signal amplification method.

### BACKGROUND

A fiber amplifier is a main means of compensating for an optical signal loss in an optical fiber communication system, performance and a bandwidth of the fiber amplifier have important impact on overall performance of the optical fiber communication system, and costs of the fiber amplifier are a key factor that determines whether the entire system can adapt to more application scenarios. Therefore, a low-cost fiber amplifier becomes a research hotspot in the industry. Reducing costs of a pump laser in the fiber amplifier is the key to the low-cost fiber amplifier.

At present, pump lasers in carrier-class fiber amplifiers are mainly single-mode pumps (single-mode pump, SMP), which can directly output a single-transverse-mode laser beam. The laser beam has a relatively small light spot size, and can be efficiently coupled to a single-mode fiber. By using a wavelength division multiplexing technology, a single-mode erbium-doped fiber (Er-doped fiber, EDF) can be pumped. However, an output laser power of the SMP is limited due to a limitation of a single-mode condition, and costs of the SMP increase sharply as a power increases.

Therefore, a fiber amplifier that can reduce pump costs is urgently needed.

### SUMMARY

This application provides a fiber amplifier and an optical signal amplification method to reduce pump costs and increase a saturation output optical power of the fiber amplifier.

According to a first aspect, a fiber amplifier is provided. The fiber amplifier includes: a multi-mode pump unit, configured to generate multi-mode pump laser light; an input unit, configured to input an input optical signal and the multi-mode pump laser light to a first optical path, where the first optical path belongs to a resonant amplification unit, where the resonant amplification unit is configured to: generate single-mode pump laser light of a first wavelength range based on the multi-mode pump laser light, and repeatedly oscillate the single-mode pump laser light of the first wavelength range in the first optical path, so that the input optical signal is amplified through the single-mode pump laser light of the first wavelength range; and an output unit, configured to output an amplified input optical signal.

According to the fiber amplifier in this application, multi-mode pump laser light generated by a multi-mode pump is converted into single-mode pump laser light, so that the multi-mode pump with a larger output power and lower costs can replace a single-mode pump with a smaller output power and higher costs, thereby helping reduce pump costs and increase a saturation output optical power of the fiber amplifier

With reference to the first aspect, in some implementations of the first aspect, a wavelength range of the multi-mode pump laser light is 880 nm to 980 nm, and the first wavelength range is 970 nm to 1030 nm.

According to the fiber amplifier provided in this application, the single-mode pump laser light of the wavelength range of 970 nm to 1030 nm can be generated to amplify the input optical signal. Signal-to-noise ratio performance is better, and a requirement of a carrier-class fiber amplifier can be met.

With reference to the first aspect, in some implementations of the first aspect, the first optical path includes: a double-clad ytterbium-doped fiber, configured to: absorb the multi-mode pump laser light, and generate and amplify the single-mode pump laser light of the first wavelength range; and an erbium-doped fiber, configured to: absorb the single-mode pump laser light of the first wavelength range, and amplify the input optical signal.

According to the fiber amplifier provided in this application, the single-mode erbium-doped fiber in the existing carrier-class fiber amplifier can be directly reused to ensure that an available operating spectrum bandwidth of the fiber amplifier is consistent with that of an existing product, thereby helping reduce the pump costs.

With reference to the first aspect, in some implementations of the first aspect, the resonant amplification unit further includes a cladding pump stripper, configured to strip the multi-mode pump laser light that is not absorbed by the double-clad ytterbium-doped fiber.

With reference to the first aspect, in some implementations of the first aspect, the cladding pump stripper is located between the erbium-doped fiber and the double-clad ytterbium-doped fiber.

With reference to the first aspect, in some implementations of the first aspect, the resonant amplification unit includes a resonant cavity, and the resonant amplification unit repeatedly oscillates the single-mode pump laser light of the first wavelength range in the first optical path by using the resonant cavity.

According to the fiber amplifier provided in this application, by disposing the resonant cavity, the single-mode pump laser light can be repeatedly oscillated in the resonant cavity and repeatedly pass through the erbium-doped fiber, so that the erbium-doped fiber can absorb the single-mode pump laser light more significantly, thereby increasing a pump absorption coefficient.

With reference to the first aspect, in some implementations of the first aspect, the resonant cavity includes a first fiber grating and a second fiber grating, reflectivity of the first fiber grating and the second fiber grating to the single-mode pump laser light of the first wavelength range is greater than a first threshold, and transmittance of the first fiber grating and the second fiber grating to the amplified input optical signal is greater than a second threshold.

By way of example but not limitation, the first threshold may be 90%, and the second threshold may be 90%. In this way, the first fiber grating and the second fiber grating have higher reflectivity (for example, the reflectivity ≥ 90%) to the single-mode pump laser light of the first wavelength range, so that the single-mode pump laser light of the first wavelength range can be repeated oscillated in the resonant cavity and repeatedly pass through the erbium-doped fiber, and the erbium-doped fiber can absorb the single-mode pump laser light more significantly, thereby increasing the pump absorption coefficient. In addition, the first fiber grating and the second fiber grating have higher transmittance (for example, the transmittance ≥ 90%) to the amplified input optical signal. Therefore, the input optical signal can be smoothly output after being amplified in the resonant cavity, and NF performance of the amplified optical signal can be ensured.

With reference to the first aspect, in some implementations of the first aspect, a wavelength difference between the first fiber grating and the second fiber grating is less than a reflection bandwidth of the first fiber grating and the second fiber grating.

With reference to the first aspect, in some implementations of the first aspect, the input unit further includes a first wavelength division multiplexer, configured to couple the input optical signal and the multi-mode pump laser light to the first optical path.

With reference to the first aspect, in some implementations of the first aspect, the output unit further includes a second wavelength division multiplexer, configured to: separate the amplified input optical signal from the first optical path, and output the amplified input optical signal.

With reference to the first aspect, in some implementations of the first aspect, the output unit further includes a gain flattening filter and/or a variable optical attenuator.

With reference to the first aspect, in some implementations of the first aspect, the erbium-doped fiber is any one of the following: a single-mode erbium-doped fiber, a large-mode-area erbium-doped fiber, or a double-clad erbium-doped fiber.

According to a second aspect, an optical signal amplification method is provided. The method includes: receiving an input optical signal, and inputting the input optical signal to a first optical path; generating multi-mode pump laser light; generating single-mode pump laser light of a first wavelength range based on the multi-mode pump laser light, and repeatedly oscillating the single-mode pump laser light of the first wavelength range in the first optical path, so that the input optical signal is amplified through the single-mode pump laser light of the first wavelength range; and outputting an amplified input optical signal.

According to the technical solution provided in this application, a multi-mode pump replaces a single-mode pump, so that pump costs can be reduced, and a saturation output optical power of a fiber amplifier can be increased.

With reference to the second aspect, in some implementations of the second aspect, a wavelength range of the multi-mode pump laser light is 880 nm to 980 nm, and the first wavelength range is 970 nm to 1030 nm.

According to the fiber amplifier provided in this application, the single-mode pump laser light of the wavelength range of 970 nm to 1030 nm can be generated to amplify the input optical signal. NF performance is better, and a requirement of a carrier-class fiber amplifier can be met.

With reference to the second aspect, in some implementations of the second aspect, the first optical path includes: a double-clad ytterbium-doped fiber, configured to: absorb the multi-mode pump laser light, and generate and amplify the single-mode pump laser light of the first wavelength range; and an erbium-doped fiber, configured to: absorb the single-mode pump laser light of the first wavelength range, and amplify the input optical signal.

With reference to the second aspect, in some implementations of the second aspect, the erbium-doped fiber is any one of the following: a single-mode erbium-doped fiber, a large-mode-area erbium-doped fiber, or a double-clad erbium-doped fiber.

According to a third aspect, a fiber communication system is provided. The system includes an optical amplifier site, and the optical amplifier site includes the fiber amplifier provided in the first aspect.

According to a fourth aspect, an optical signal amplification apparatus is provided. The apparatus is configured to perform the method according to the second aspect. Specifically, the apparatus may include a unit and/or a module configured to perform the method provided in the second aspect, for example, a processing module and/or a transceiver module.

In an implementation, the apparatus is an amplifier. When the apparatus is an amplifier, the transceiver module may be a transceiver or an input/output interface, and the processing module may be a processor.

In another implementation, the apparatus is a chip, a chip system, or a circuit configured to amplify an optical signal. When the apparatus is a chip, a chip system, or a circuit in an optical signal amplification device, the transceiver module may be an input/output interface, an interface circuit, an output circuit, an input circuit, a pin, a related circuit, or the like on the chip, the chip system, or the circuit; and the processing module may be a processor, a processing circuit, a logic circuit, or the like.

Based on beneficial effects of the foregoing solutions, refer to corresponding descriptions in the first aspect. For brevity, details are not described herein again in this application.

Optionally, the transceiver may be a transceiver circuit. Optionally, the input/output interface may be an input/output circuit.

### BRIEF DESCRIPTION OF DRAWINGS

FIG. 1 is a schematic structural diagram of a carrier-class fiber amplifier;
FIG. 2 is a schematic diagram in which a single-mode laser signal is amplified through multi-mode laser light;
FIG. 3 is a schematic structural diagram of a single-mode fiber amplifier;
FIG. 4 is a schematic structural diagram of a fiber amplifier according to this application;
FIG. 5 is a schematic structural diagram of a specific example of a fiber amplifier according to this application;
FIG. 6 is another schematic structural diagram of a specific example of a fiber amplifier according to this application;
FIG. 7 is a schematic structural diagram of a multi-level structure of a fiber amplifier according to this application;
FIG. 8 is a schematic structural diagram of a multi-group array structure of a fiber amplifier according to this application; and
FIG. 9 is a schematic flowchart of an optical signal amplification method according to this application.

### DESCRIPTION OF EMBODIMENTS

The following describes technical solutions in this application with reference to the accompanying drawings.

The technical solutions in embodiments of this application may be applied to a fiber communication network. For example, the technical solutions in embodiments of this application may be applied to a fiber amplifier in the fiber communication network, and the fiber amplifier is mainly located at an optical amplifier site and an optical amplifier network element in the fiber communication network. The technical solutions in embodiments of this application may be used to implement a fiber amplifier including a multi-core fiber.

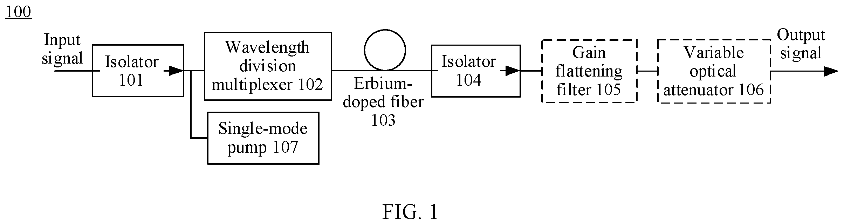

FIG. 1 is a schematic structural diagram of a carrier-class fiber amplifier 100. The fiber amplifier 100 includes an isolator (isolator, ISO) 101, a wavelength division multiplexer (wavelength division multiplexer, WDM) 102, an erbium-doped fiber (Er-doped fiber, EDF) 103, an isolator 104, and a single-mode pump 107. Optionally, the fiber amplifier 100 may further include a gain flattening filter 105 and a variable optical attenuator 106. As the pump laser of the fiber amplifier 100, the single-mode pump SMP 107 can directly output a single-transverse-mode laser beam. The laser beam has a relatively small light spot size, and can be efficiently coupled to a single-mode fiber. Then, by using a wavelength division multiplexing technology, a single-mode EDF can be pumped.

A fiber amplifier is a main means of compensating for an optical signal loss in an optical fiber communication system, performance and bandwidth of the fiber amplifier have an important impact on overall performance of the optical fiber communication system, and costs of the fiber amplifier are a key factor that determines whether the entire system can adapt to more application scenarios. Therefore, a low-cost fiber amplifier becomes a research hotspot in the industry. Reducing costs of a pump laser in the fiber amplifier is the key to realize the low-cost fiber amplifier.

However, an output laser power of the SMP described above is limited due to a limitation of a single-mode condition, and the costs of the SMP increase sharply with the increase of power

An MMP has no single-mode condition limitation, and the output power of the MMP is far higher than that of the SMP. In addition, the output power of the MMP can reach the kilowatt level by using an external beam combination method. Further, a manufacturing process of the MMP is simple and costs are low. However, the size and divergence angle of a light spot output by the MMP are relatively large, and it is difficult to directly couple the light spot to the single-mode fiber. Therefore, the EDF cannot be pumped by using the wavelength division multiplexing technology.

Therefore, a fiber amplifier that can reduce pump costs is urgently needed.

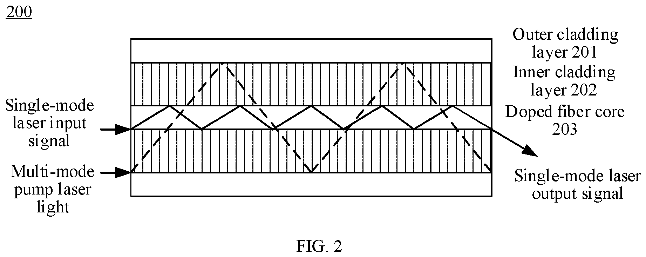

At present, a known technology can reduce the pumping costs by using a cladding pump and a double-clad doped fiber. As shown in FIG. 2, multi-mode pump (multi-mode pump, MMP) laser light is coupled to an inner cladding layer of a double-clad fiber for propagation, and to-be-amplified single-mode signal laser light is propagated in a fiber core of the double-clad fiber. The inner cladding layer and the fiber core of the double-clad fiber are coaxial. Therefore, multi-mode laser light in the inner cladding layer may pass through the fiber core in an axial propagation process, and rare earth ions in the fiber core are pumped to an upper energy level, so that the single-mode signal laser light is amplified through the multi-mode pump.

However, in the foregoing method, a probability of the MMP passing through the fiber core is very low, approximately equal to a ratio of the fiber core to an inner cladding cross-sectional area (less than 1%). Therefore, this technology can greatly reduce an equivalent absorption coefficient of a pump. For example, the pump absorption coefficient of a common single-mode EDF is 5 dB/m. When this technology is used, the equivalent coefficient of the EDF is less than 0.05 dB/m, that is, the required fiber length is increased by more than 100 times, and costs are greatly increased. In addition, under the same pump power, due to lower pump absorption, the upper level inversion of EDF is lower and the noise figure (noise figure, NF) performance is greatly reduced. Therefore, this technology can only be applied to an erbium-ytterbium-doped fiber, which has a larger pump absorption coefficient. However, the erbium-ytterbium-doped fiber is still quite different from the EDF in terms of an amplifiable bandwidth and the NF performance. Therefore, at present, this technology is commonly applied to a community antenna television (community antenna television, CATV), but cannot be applied to the carrier-class fiber amplifier.

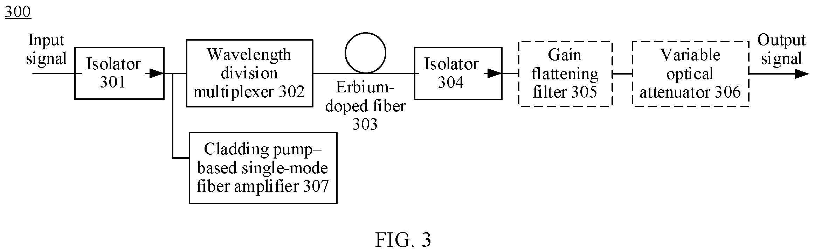

FIG. 3 is a schematic structural diagram of a single-mode fiber amplifier. As shown in FIG. 3, based on the foregoing method, an MMP constructs a single-mode fiber amplifier by using a cladding pump technology to generate or amplify single-mode pump laser light. The amplified single-mode pump laser light is then coupled to a fiber amplifier through a WDM to pump rare earth ions, thereby amplifying a single-mode laser signal.

However, this technology cannot effectively generate or amplify an optimal pump band (for example, 980 nm) required by a carrier-class fiber amplifier. A common means of this technology is to generate single-mode 101×nm or 153xnm fiber laser light by a cladding pump as a pump source of a subsequent fiber amplifier. The 1018 nm laser light commonly used in this field is used as an example. An absorption coefficient of the EDF at 1018 nm is about 0.3 dB/m. Although the technology is improved compared with the technology shown in FIG. 2, the disadvantages of an increased length of the optical fiber and the greatly reduced NF performance cannot be avoided. However, for the technical solution of the 153xnm pump, the in-band pump causes the NF performance to deteriorate greatly. In addition, the 153xnm pump cannot cover the amplification of the 152xnm signal, and therefore cannot support the amplification of the entire C band.

A multi-mode pump has no single-mode condition limitation, and the output power of the multi-mode pump is far higher than that of the single-mode pump. In addition, the output power of the multi-mode pump can reach the kilowatt level by using an external beam combination method. Further, a manufacturing process of the multi-mode pump is simple and costs are low. However, the size and divergence angle of a light spot output by the multi-mode pump are relatively large, and it is difficult to directly couple the light spot to the single-mode fiber. Therefore, the EDF cannot be pumped by using the wavelength division multiplexing technology.

Based on this, this application provides a fiber amplifier to expect that the multi-mode pump can replace the single-mode pump, thereby reducing pump costs and increasing a saturation output optical power of the fiber amplifier.

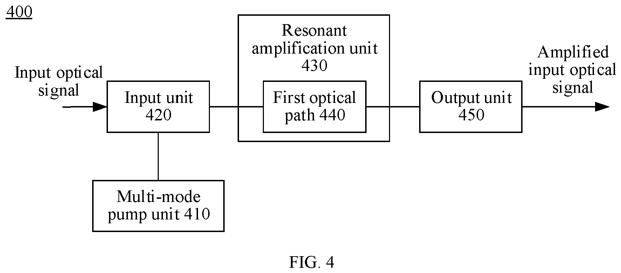

FIG. 4 is a schematic structural diagram of a fiber amplifier according to this application.

As shown in FIG. 4, the fiber amplifier 400 includes a multi-mode pump unit 410, an input unit 420, a resonant amplification unit 430, and an output unit 450. The multi-mode pump unit 410 is configured to generate multi-mode pump laser light. The input unit 420 is configured to input an input optical signal and the multi-mode pump laser light to a first optical path 440, where the first optical path 440 belongs to the resonant amplification unit 430. The resonant amplification unit 430 is configured to: generate single-mode pump laser light of a first wavelength range based on the multi-mode pump laser light, and repeatedly oscillate the single-mode pump laser light of the first wavelength range in the first optical path, so that the input optical signal is amplified through the single-mode pump laser light of the first wavelength range. The output unit 450 is configured to output an amplified input optical signal.

The input optical signal may be a transmission optical signal in a previous optical fiber link, or may be an optical signal directly output by a laser. The output optical signal has a higher power, and may be directly input to a next optical fiber link for further transmission, or may be directly output for control or detection.

Optionally, a wavelength range of the foregoing multi-mode pump laser light is 880 nm to 980 nm, and the first wavelength range is 970 nm to 1030 nm.

According to the fiber amplifier provided in this application, the single-mode pump laser light of the wavelength range of 970 nm to 1030 nm can be generated to amplify the input optical signal. NF performance is better, and a requirement of a carrier-class fiber amplifier can be met.

Optionally, the first optical path includes: a double-clad ytterbium-doped fiber, configured to: absorb the multi-mode pump laser light, and generate and amplify the single-mode pump laser light of the first wavelength range; and an erbium-doped fiber, configured to: absorb the single-mode pump laser light of the first wavelength range, and amplify the input optical signal.

According to the fiber amplifier provided in this application, the single-mode erbium-doped fiber in the existing carrier-class fiber amplifier can be directly reused to ensure that an available operating spectrum bandwidth of the fiber amplifier is consistent with that of an existing product, thereby helping reduce the pump costs.

Optionally, the resonant amplification unit further includes a cladding pump stripper, configured to strip the multi-mode pump laser light that is not absorbed by the double-clad ytterbium-doped fiber.

Optionally, the cladding pump stripper is located between the erbium-doped fiber and the double-clad ytterbium-doped fiber.

Optionally, the resonant amplification unit includes a resonant cavity, and the resonant amplification unit repeatedly oscillates the single-mode pump laser light of the first wavelength range in the first optical path by using the resonant cavity.

According to the fiber amplifier provided in this application, by disposing the resonant cavity, the single-mode pump laser light can be repeatedly oscillated in the resonant cavity and repeatedly pass through the erbium-doped fiber, so that the erbium-doped fiber can absorb the single-mode pump laser light more significantly, thereby increasing a pump absorption coefficient.

Optionally, the resonant cavity includes a first fiber grating and a second fiber grating, reflectivity of the first fiber grating and the second fiber grating to the single-mode pump laser light of the first wavelength range is greater than a first threshold, and transmittance of the first fiber grating and the second fiber grating to the amplified input optical signal is greater than a second threshold.

By way of example but not limitation, the first threshold may be 90%, and the second threshold may be 90%. In this way, the first fiber grating and the second fiber grating have higher reflectivity (for example, the reflectivity ≥ 90%) to the single-mode pump laser light of the first wavelength range, so that the single-mode pump laser light of the first wavelength range can be repeated oscillated in the resonant cavity and repeatedly pass through the erbium-doped fiber, and the erbium-doped fiber can absorb the single-mode pump laser light more significantly, thereby increasing the pump absorption coefficient. In addition, the first fiber grating and the second fiber grating have higher transmittance (for example, the transmittance ≥ 90%) to the amplified input optical signal. Therefore, the input optical signal can be smoothly output after being amplified in the resonant cavity, and NF performance of the amplified optical signal can be ensured.

It should be understood that in this embodiment of this application, the first threshold and the second threshold may be further adjusted based on conditions such as a fiber length and a parameter requirement for the amplified input optical signal. For example, when the ytterbium-doped fiber is relatively long, the first threshold may be reduced; and when the erbium-doped fiber is relatively long, the first threshold may be increased. For another example, when it is required that the amplified input optical signal has relatively high NF performance, the second threshold may be increased. Otherwise, the second threshold may be reduced.

Optionally, a wavelength difference between the first fiber grating and the second fiber grating is less than a reflection bandwidth of the first fiber grating and the second fiber grating.

Optionally, the input unit further includes a first wavelength division multiplexer, configured to couple the input optical signal and the multi-mode pump laser light to the first optical path.

Optionally, the output unit further includes a second wavelength division multiplexer, configured to: separate the amplified input optical signal from the first optical path, and output the amplified input optical signal.

In a possible implementation, the first wavelength division multiplexer and the second wavelength division multiplexer may form the resonant cavity structure described above.

Optionally, the output unit further includes a gain flattening filter and/or a variable optical attenuator.

Optionally, the erbium-doped fiber is any one of the following: a single-mode erbium-doped fiber, a large-mode-area erbium-doped fiber, or a double-clad erbium-doped fiber.

A multi-mode pump has no single-mode condition limitation, and the output power of the multi-mode pump is far higher than that of the single-mode pump. In addition, the output power of the multi-mode pump can reach the kilowatt level by using an external beam combination method. Further, a manufacturing process of the multi-mode pump is simple and costs are low. However, the size and divergence angle of a light spot output by the multi-mode pump are relatively large, and it is difficult to directly couple the light spot to the single-mode fiber. Therefore, the EDF cannot be pumped by using the wavelength division multiplexing technology.

According to the fiber amplifier in this application, multi-mode pump laser light generated by a multi-mode pump is converted into single-mode pump laser light, so that the multi-mode pump with a larger output power and lower costs can replace a single-mode pump with a smaller output power and higher costs, thereby helping reduce pump costs and increase a saturation output optical power of the fiber amplifier

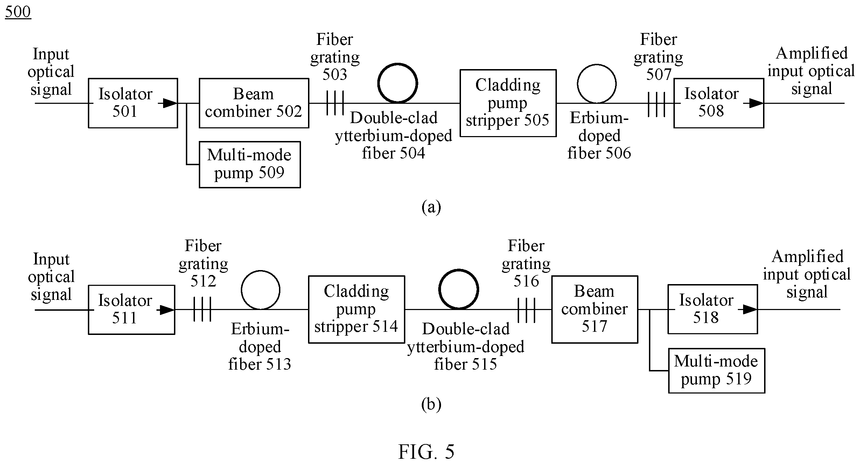

FIG. 5 is a schematic structural diagram of a specific example of a fiber amplifier according to this application.

As shown in FIG. 5, FIG. 5(a) and FIG. 5(b) respectively show a fiber amplifier of a forward pump and a fiber amplifier of a backward pump. The fiber amplifier of the forward pump shown in FIG. 5(a) is used as an example. A multi-mode pump unit of the fiber amplifier includes a multi-mode pump 509, configured to generate multi-mode pump laser light, where a wavelength range of the multi-mode pump laser light may be 880 nm to 980 nm. The input unit includes an isolator 501. In this embodiment, the input unit further includes a beam combiner 502, configured to input an input optical signal (for example, a C-band or L-band telecommunication signal) and the multi-mode pump laser light to a fiber core and an inner cladding layer in a double-clad fiber (that is, to the resonant amplification unit). The resonant amplification unit includes a fiber grating 503, a double-clad ytterbium-doped fiber 504, a cladding pump stripper 505, an erbium-doped fiber 506, and a fiber grating 507. The double-clad ytterbium-doped fiber 504 is configured to: absorb the multi-mode pump laser light, and generate and amplify single-mode pump laser light of a first wavelength range, where the first wavelength range may be 970 nm to 1030 nm. The cladding pump stripper 505 is configured to strip the multi-mode pump laser light that is not absorbed by the double-clad ytterbium-doped fiber 504. Reflectivity of the fiber grating 503 and the fiber grating 507 to the single-mode pump laser light of the first wavelength range is greater than a first threshold (for example, 90%). Transmittance to the amplified input optical signal is greater than a second threshold (for example, 90%). A wavelength difference between the fiber grating 503 and the fiber grating 507 is less than a larger reflection bandwidth of the two. The output unit includes an optical isolator 508, configured to output an amplified input optical signal.

The fiber grating 503 and the fiber grating 507 may form a resonant cavity structure. The fiber grating 503 and the fiber grating 507 have high reflectivity to the single-mode pump laser light of the first wavelength range, so that the single-mode pump laser light of the first wavelength range may be repeatedly oscillated in the first optical path formed by the double-clad ytterbium-doped fiber 504 and the erbium-doped fiber 506, and continuously pass through the erbium-doped fiber 506, thereby equivalently increasing the pump absorption coefficient.

A basic structure and principle of the backward pump fiber amplifier shown in FIG. 5(b) are basically the same as those of the forward pump fiber amplifier. For brevity, details are not described herein again.

According to the fiber amplifier in this application, multi-mode pump laser light generated by a multi-mode pump is converted into single-mode pump laser light, so that the multi-mode pump with a larger output power and lower costs can replace a single-mode pump with a smaller output power and higher costs, thereby helping reduce pump costs and increase a saturation output optical power of the fiber amplifier

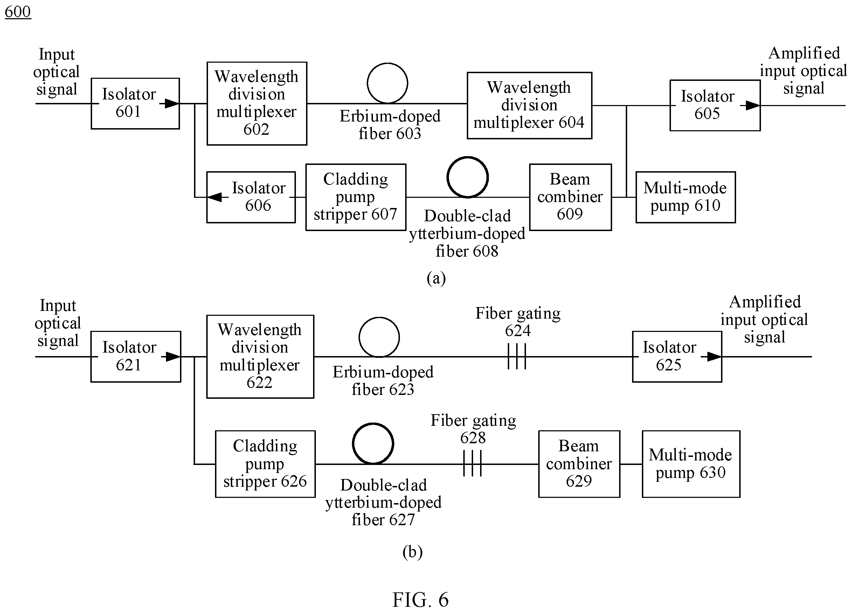

FIG. 6 is another schematic structural diagram of a specific example of a fiber amplifier according to this application.

In the structure shown in FIG. 5, the input optical signal passes through a series of newly added components such as a double-layer ytterbium-doped fiber and a cladding pump stripper that may cause an insertion loss. This may cause energy consumption and poor NF performance. To avoid the foregoing case, this application provides a schematic structural diagram shown in FIG. 6.

As shown in FIG. 6(a), a multi-mode pump unit includes a multi-mode pump 610, configured to generate multi-mode pump laser light, where a wavelength range of the multi-mode pump laser light may be 880 nm to 980 nm. An input unit includes an isolator 601. In this embodiment, the input unit further includes a wavelength division multiplexer 602, configured to input an input optical signal (for example, a 1.5 µm telecommunication signal) and the multi-mode pump laser light to a fiber core and an inner cladding layer in a double-clad fiber (which may alternatively be a double-clad erbium-doped fiber) (that is, to a resonant amplification unit). The resonant amplification unit includes a double-clad ytterbium-doped fiber 608, a cladding pump stripper 607, and an erbium-doped fiber 603. For a function thereof, refer to the foregoing description, and details are not described herein again. An output unit includes an optical isolator 605. In this embodiment, the output unit further includes a wavelength division multiplexer 604, configured to: separate an amplified input optical signal from a first optical path, output the amplified input optical, and input single-mode pump laser light of a first wavelength range to a beam combiner 609.

The wavelength division multiplexer 602 of the input unit and the wavelength division multiplexer 604 of the output unit may further form a ring resonant cavity structure, so that the single-mode pump laser light of the first wavelength range can be repeatedly oscillated in the first optical path formed by the double-clad ytterbium-doped fiber 608 and the erbium-doped fiber 603, and continuously pass through the erbium-doped fiber 603, thereby equivalently increasing a pump absorption coefficient.

As shown in FIG. 6(b), an input unit includes an isolator 621. In this embodiment, the input unit further includes a wavelength division multiplexer 622. For a function thereof, refer to the description in FIG. 6(a), and details are not described herein again. A resonant amplification unit includes a fiber grating 624, a double-clad ytterbium-doped fiber 627, a cladding pump stripper 626, an erbium-doped fiber 623, and a fiber grating 628. For functions of the components, refer to the descriptions in FIG. 5, and details are not described herein again.

The fiber grating 624 and the fiber grating 628 may form a resonant cavity structure. The fiber grating 624 and the fiber grating 628 have high reflectivity to the single-mode pump laser light of the first wavelength range, so that the single-mode pump laser light of the first wavelength range may be repeatedly oscillated in the first optical path formed by the double-clad ytterbium-doped fiber 627 and the erbium-doped fiber 623, and continuously pass through the erbium-doped fiber 623, thereby equivalently increasing the pump absorption coefficient.

According to the fiber amplifier in this application, multi-mode pump laser light generated by a multi-mode pump is converted into single-mode pump laser light, so that the multi-mode pump with a larger output power and lower costs can replace a single-mode pump with a smaller output power and higher costs, thereby helping reduce pump costs and increase a saturation output optical power of the fiber amplifier. Further, in this embodiment, the input optical signal does not pass through a series of newly added components such as a double-clad ytterbium-doped fiber and a cladding pump stripper that may cause an insertion loss. Therefore, an upper limit of NF performance is better.

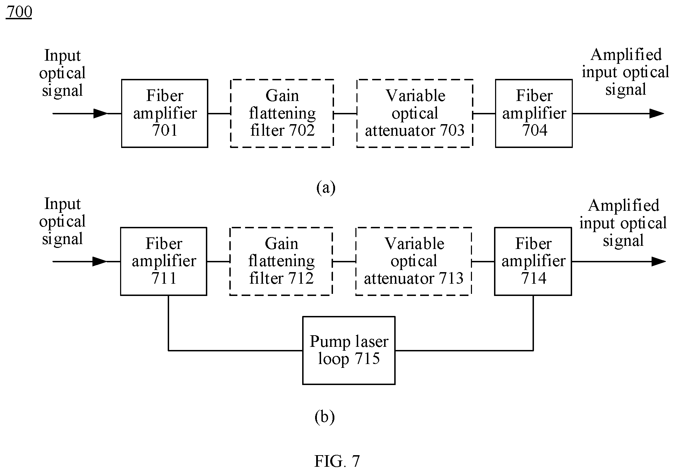

FIG. 7 is a schematic structural diagram of a multi-level structure of a fiber amplifier according to this application.

As shown in FIG. 7(a), the structure of the fiber amplifier changes from a single-stage structure into a multi-stage structure. After being amplified by the single-stage fiber amplifier shown in FIG. 5 or FIG. 6, an input optical signal may undergo gain shaping through a gain flattening filter (gain flattening filter, GFF) 702, a variable optical attenuator (variable optical attenuator, VOA) 703 adjusts an optical power, and the input optical signal is amplified by a second-stage single-stage amplifier. By analogy, multi-stage structures may be superimposed, a GFF and a VOA may be disposed between the amplifiers, and the single-stage fiber amplifier shown in FIG. 5 or FIG. 6 may be used for amplifiers of different stages. The GFF and the VOA may belong to an output unit of a previous-stage fiber amplifier. In this case, the output unit further has functions of performing gain shaping on the output amplified input optical signal and adjusting the optical power.

According to the fiber amplifier in this application, multi-mode pump laser light generated by a multi-mode pump is converted into single-mode pump laser light, so that the multi-mode pump with a larger output power and lower costs can replace a single-mode pump with a smaller output power and higher costs, thereby helping reduce pump costs and increase a saturation output optical power of the fiber amplifier. Further, in this embodiment, the input optical signal may be amplified by a plurality of fiber amplifiers, thereby helping reduce the pump costs and increase the saturation output optical power of the fiber amplifier.

In addition, as shown in FIG. 7(b), to further reduce the costs, different stages of fiber amplifiers may also use a wavelength division multiplexer to connect the single-mode pump laser light to form a single-mode pump laser loop 715, to reuse components such as a double-clad ytterbium-doped fiber and a cladding pump stripper.

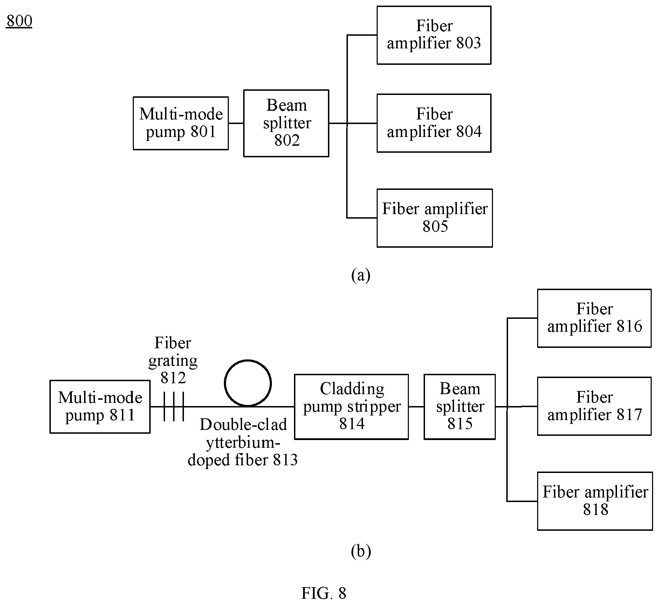

FIG. 8 is a schematic structural diagram of a multi-group array structure of a fiber amplifier according to this application.

As shown in FIG. 8, a single group of fiber amplifiers become a plurality of groups of arrays, and a plurality of groups of input optical signals are amplified in parallel by the fiber amplifier shown in FIG. 5 or FIG. 6. For example, as shown in FIG. 8(a), a multi-mode pump 801 has a high-power output capability (up to hundreds of watts). Therefore, a beam splitter 802 may distribute, based on an energy ratio, multi-mode pump laser light generated by the multi-mode pump 801 to different fiber amplifiers as a pump input, for example, to a fiber amplifier 803, a fiber amplifier 804, and a fiber amplifier 805.

According to the fiber amplifier in this application, multi-mode pump laser light generated by a multi-mode pump is converted into single-mode pump laser light, so that the multi-mode pump with a larger output power and lower costs can replace a single-mode pump with a smaller output power and higher costs, thereby helping reduce pump costs and increase a saturation output optical power of the fiber amplifier. Further, in this embodiment, the beam splitter distributes, based on an energy ratio, multi-mode pump laser light generated by a single multi-mode pump to different fiber amplifiers as a pump input. This can greatly improve the system integration and reduce the pump costs.

In addition, as shown in FIG. 8(b), to further the reduce costs, a plurality of groups of fiber amplifiers may share a conversion part of the multi-mode pump to reduce a quantity of double-clad ytterbium-doped fibers and passive components.

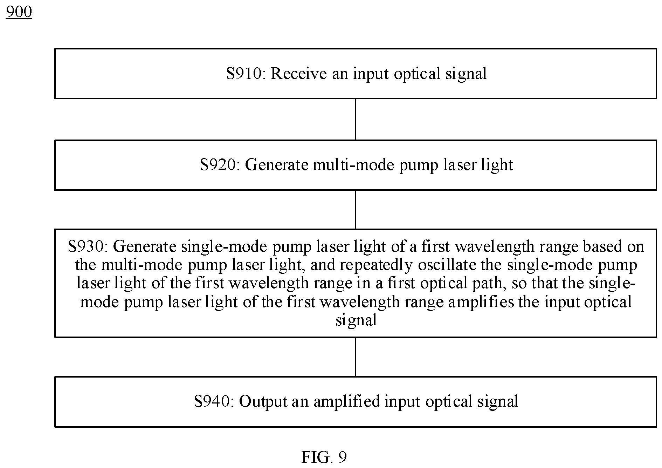

FIG. 9 is a schematic flowchart of an optical signal amplification method according to this application.

S910: Receive an input optical signal, and input the input optical signal to a first optical path.

Specifically, the input optical signal may be a transmission optical signal in a previous optical fiber link, or may be an optical signal directly output by a laser.

S920: Generate multi-mode pump laser light.

In this embodiment of this application, the multi-mode pump laser light may be generated by a multi-mode pump may generate.

Optionally, a wavelength range of the multi-mode pump laser light may be 880 nm to 980 nm.

S930: Generate single-mode pump laser light of a first wavelength range based on the multi-mode pump laser light, and repeatedly oscillate the single-mode pump laser light of the first wavelength range in the first optical path, so that the input optical signal is amplified through the single-mode pump laser light of the first wavelength range

Optionally, the first wavelength range may be 970 nm to 1030 nm.

According to the technical solution provided in this application, the single-mode pump laser light of the wavelength range of 970 nm to 1030 nm can be generated based on the multi-mode pump laser light to amplify the input optical signal. NF performance is better, and a requirement of a carrier-class fiber amplifier can be met.

The first optical path may include a double-clad ytterbium-doped fiber and an erbium-doped fiber. The double-clad ytterbium-doped fiber is configured to: absorb the multi-mode pump laser light, and generate and amplify the single-mode pump laser light of the first wavelength range. The erbium-doped fiber is configured to: absorb the single-mode pump laser light of the first wavelength range, and amplify the input optical signal.

According to the technical solution provided in this application, the single-mode erbium-doped fiber in the existing carrier-class fiber amplifier can be directly reused to ensure that an available operating spectrum bandwidth of the fiber amplifier is consistent with that of an existing product.

In the foregoing method, the single-mode pump laser light can be oscillated in the first optical path by using a resonant cavity structure.

In a possible implementation, the resonant cavity may include a first fiber grating and a second fiber grating, reflectivity of the first fiber grating and the second fiber grating to the single-mode pump laser light of the first wavelength range is greater than a first threshold, and transmittance of the first fiber grating and the second fiber grating to the amplified input optical signal is greater than a second threshold.

By way of example but not limitation, the first threshold may be 90%, and the second threshold may be 90%. In this way, the first fiber grating and the second fiber grating have higher reflectivity (for example, the reflectivity ≥ 90%) to the single-mode pump laser light of the first wavelength range, so that the single-mode pump laser light of the first wavelength range can be repeated oscillated in the resonant cavity and repeatedly pass through the erbium-doped fiber, and the erbium-doped fiber can absorb the single-mode pump laser light more significantly, thereby increasing the pump absorption coefficient. In addition, the first fiber grating and the second fiber grating have higher transmittance (for example, the transmittance ≥ 90%) to the amplified input optical signal. Therefore, the input optical signal can be smoothly output after being amplified in the resonant cavity, and NF performance of the amplified optical signal can be ensured.

It should be understood that in this embodiment of this application, the first threshold and the second threshold may be further adjusted based on conditions such as a fiber length and a parameter requirement for the amplified input optical signal. For example, when the ytterbium-doped fiber is relatively long, the first threshold may be reduced; and when the erbium-doped fiber is relatively long, the first threshold may be increased. For another example, when it is required that the amplified input optical signal has relatively high NF performance, the second threshold may be increased. Otherwise, the second threshold may be reduced.

Optionally, a wavelength difference between the first fiber grating and the second fiber grating is less than a reflection bandwidth of the first fiber grating and the second fiber grating.

In another possible implementation, the resonant cavity may include a first wavelength division multiplexer and a second wavelength division multiplexer. The first wavelength division multiplexer is configured to couple the input optical signal and the multi-mode pump laser light (and/or the single-mode pump laser light of the first wavelength range) to the first optical path. The second wavelength division multiplexer is configured to: separate an amplified input optical signal from the first optical path, output the amplified input optical signal, and transport the single-mode pump laser light of the first wavelength range to the first wavelength division multiplexer.

Optionally, the erbium-doped fiber is any one of the following: a single-mode erbium-doped fiber, a large-mode-area erbium-doped fiber, or a double-clad erbium-doped fiber.

S940: Output the amplified input optical signal.

The amplified input optical signal may be directly input to a next optical fiber link for further transmission, or may be directly output for control or detection.

According to the fiber amplifier in this application, multi-mode pump laser light generated by a multi-mode pump is converted into single-mode pump laser light, so that the multi-mode pump with a larger output power and lower costs can replace a single-mode pump with a smaller output power and higher costs, thereby helping reduce pump costs and increase a saturation output optical power of the fiber amplifier

An embodiment of this application further provides an apparatus, including a processor and an interface. The processor may be configured to perform the method in the foregoing method embodiment.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing method can be implemented by using a hardware integrated logical circuit in the processor, or by using instructions in a form of software. The steps in the method disclosed with reference to embodiments of this application may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiment can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, any conventional processor, or the like. The steps of the method disclosed with reference to embodiments of this application may be directly performed by a hardware decoding processor or a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the method in the embodiment shown in FIG. 9.

According to the method provided in embodiments of this application, this application further provides a computer-readable medium. The computer-readable medium stores program code. When the program code is run on a computer, the computer is enabled to perform the method in the embodiment shown in FIG. 9.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium. (for example, a high-density digital video disc (digital video disc, DVD)), or a semiconductor medium (for example, a solid state drive (solid state disc, SSD)), or the like.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, illustrative logical blocks (illustrative logical block) and steps (step) that are described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can clearly understand that for convenient and brief description, for detailed working processes of the foregoing system, apparatus, and units, refer to corresponding processes in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A fiber amplifier, comprising:
a multi-mode pump unit, configured to generate multi-mode pump laser light;
an input unit, configured to input an input optical signal and the multi-mode pump laser light to a first optical path, wherein the first optical path belongs to a resonant amplification unit, wherein
the resonant amplification unit is configured to: generate single-mode pump laser light of a first wavelength range based on the multi-mode pump laser light, and repeatedly oscillate the single-mode pump laser light of the first wavelength range in the first optical path, so that the input optical signal is amplified through the single-mode pump laser light of the first wavelength range; and
an output unit, configured to output an amplified input optical signal.

2. The fiber amplifier according to claim 1, wherein a wavelength range of the multi-mode pump laser light is 880 nm to 980 nm, and the first wavelength range is 970 nm to 1030 nm.

3. The fiber amplifier according to claim 1 or 2, wherein the first optical path comprises:
a double-clad ytterbium-doped fiber, configured to: absorb the multi-mode pump laser light, and generate and amplify the single-mode pump laser light of the first wavelength range; and
an erbium-doped fiber, configured to: absorb the single-mode pump laser light of the first wavelength range, and amplify the input optical signal.

4. The fiber amplifier according to claim 3, wherein the resonant amplification unit further comprises a cladding pump stripper, configured to strip the multi-mode pump laser light that is not absorbed by the double-clad ytterbium-doped fiber.

5. The fiber amplifier according to claim 4, wherein the cladding pump stripper is located between the erbium-doped fiber and the double-clad ytterbium-doped fiber.

6. The fiber amplifier according to any one of claims 1 to 5, wherein the resonant amplification unit comprises a resonant cavity, and the resonant amplification unit repeatedly oscillates the single-mode pump laser light of the first wavelength range in the first optical path by using the resonant cavity.

7. The fiber amplifier according to claim 6, wherein the resonant cavity comprises a first fiber grating and a second fiber grating, reflectivity of the first fiber grating and the second fiber grating to the single-mode pump laser light of the first wavelength range is greater than a first threshold, and transmittance of the first fiber grating and the second fiber grating to the amplified input optical signal is greater than a second threshold.

8. The fiber amplifier according to claim 7, wherein a wavelength difference between the first fiber grating and the second fiber grating is less than a reflection bandwidth of the first fiber grating and the second fiber grating.

9. The fiber amplifier according to any one of claims 1 to 6, wherein the input unit further comprises a first wavelength division multiplexer, configured to couple the input optical signal and the multi-mode pump laser light to the first optical path.

10. The fiber amplifier according to claim 9, wherein the output unit further comprises a second wavelength division multiplexer, configured to: separate the amplified input optical signal from the first optical path, and output the amplified input optical signal.

11. The fiber amplifier according to any one of claims 1 to 10, wherein the output unit further comprises a gain flattening filter and/or a variable optical attenuator.

12. The fiber amplifier according to any one of claims 1 to 11, wherein the erbium-doped fiber is any one of the following:
a single-mode erbium-doped fiber, a large-mode-area erbium-doped fiber, or a double-clad erbium-doped fiber.

13. An optical signal amplification method, comprising:
receiving an input optical signal, and inputting the input optical signal to a first optical path;
generating multi-mode pump laser light;
generating single-mode pump laser light of a first wavelength range based on the multi-mode pump laser light, and repeatedly oscillating the single-mode pump laser light of the first wavelength range in the first optical path, so that the input optical signal is amplified through the single-mode pump laser light of the first wavelength range; and
outputting an amplified input optical signal.

14. A fiber communication system, comprising:
a multi-core transmission fiber, wherein the multi-core transmission fiber is configured to transmit an input optical signal; and
an optical amplifier site, wherein the optical amplifier site comprises the fiber amplifier according to any one of claims 1 to 12, and the fiber amplifier is configured to amplify the input optical signal.
